# EUROPEAN PATENT APPLICATION

(11) **EP 1 355 253 A2**
(43) Date of publication of application: **22.10.2003**
(21) Application number: 03252398.7
(22) Date of filing: 15.04.2003
(51) Int. Cl.: G06F 17/60

(54) **Method of providing information**

(30) Priority: 16.04.2002 US 123457
(71) Applicant: Kraft Foods Holdings, Inc., Northfield, Illinois 60093 (US)
(72) Inventor: Sobecks, Brian J.,, Glenview, IL 60025 (US); MacNamara, James F. Jr, Wheeling, IL 60090 (US); Filipovic, Dragan, Morton Grove, IL 60053 (US)
(74) Representative: W.P. THOMPSON & CO.

(57) **Abstract**

A method to maintain fresh product-source-to-consumer relationship-building information for a product source at a plurality of point-of-consumer-purchasing-decision locations (12, 13, 14, and 15) at physical retail establishments (10). Concise displays of product are provided at such locations, which displays include dynamic displays (21) that convey the fresh information as obtained from storage memory (23). The memory contents can be changed in various ways by representatives of the product source to ensure that fresh content is available for presentation. Initiation and/or expiration dates and/or other contextual triggers can be used to trigger use and/or discontinuation of all or part of the stored information content.

## Description

### Technical Field

This invention relates generally to retail sales and more particularly to building relationships between consumers and product sources.

### Background

Brand recognition and loyalty constitutes an important aspect of retail sales. At a minimum, product sources (that is, the manufacturers and/or distributors of products) seek to ensure that consumers will recognize their marketing brands (and hence at least be comfortable with a purchasing decision in favor of that brand). Beyond this, product sources generally seek to build a consumer preference for the brands in question and, at best, to establish consumer behavior that evidences conviction in favor of the brand to the exclusion of alternative choices that are available to the consumer.

A variety of marketing mechanisms are utilized to establish the building of such a relationship between the consumer and a product source. The location where a consumer actually makes a purchasing decision constitutes an important venue in this context. To this end, product sources often seek to provide attractive and otherwise compelling displays at such points of consumer decision. Displays that present both product and additional marketing content utilize a variety of media to attract the attention of the consumer. In a retail context, such displays are often primarily comprised of cardboard material and/or light (or corrugated) plastic sheets bearing text and/or graphic images. In addition, some displays include mechanically moving parts (thereby animating, as an example, a moving arm on a person) and/or electronic signage.

In a typical retail grocery venue (which venue is ordinarily not owned by the product sources themselves, and includes grocery stores, superstores that offer both groceries and a variety of other consumer products (such as, for example, Wal-Mart stores), convenience food stores, and the like), competition for shelf space can be considerable. Moreover, it is well known that certain locations (such as, for example, end caps located at the end of grocery aisles) within a typical store are better suited for high volume marketing displays than others, and competition for such locations can be particularly strong and therefore costly. As a result, it is important that marketing displays placed in such locations be especially effective.

Furthermore, as compelling as any given product source retail display may be, the novelty and effectiveness of that display will typically be relatively short-lived. As a result, successful marketing strategies often include frequent rotation of such displays- Such replacement and freshening of the informational content again contributes to the overall cost of effectively staging and pursing a brand management campaign at the retail level.

Some stores are presently experimenting with standalone kiosks having dynamic electronic displays that can provide varying kinds of information to a consumer. Such displays tend to be owned by the stores themselves, however, and are used in favor of the store in general and/or store brands. Further, such units often rely upon the store's local area network for content. Such local area networks vary greatly from location to location and present a considerable barrier to participation for any product source that might wish to also share use of such a unit. Also, such units tend not to be located at points of consumer purchase decision making. Instead they are more generally located and typically serve to provide content such as store information and guides, wedding registry services, and/or various kinds of coupons. Therefore, such an approach does little to address the relationship building needs of a product source at a specific point of retail consumer purchasing decision making.

### Brief Description of the Drawings

The above needs are at least partially met through provision of the method of providing information described in the following detailed description, particularly when studied in conjunction with the drawings, wherein:
FIG. 1 comprises a schematic top plan view of a retail grocery venue as configured in accordance with a variety of embodiments of the invention;
FIG. 2 comprises a block diagram of a point-of-consumer-purchasing-decision information system as configured in accordance with an embodiment of the invention;
FIG. 3 comprises a flow diagram depicting age-based information freshening as configured in accordance with an embodiment of the invention;
FIG. 4 comprises a flow diagram depicting context-based informational content as configured in accordance with an embodiment of the invention; and
FIG. 5 comprises a front elevational schematic depiction of a product display having an information system as configured in accordance with an embodiment of the invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of various embodiments of the present invention. Also, common but well-understood elements that are useful or necessary in a commercially feasible embodiment are typically not depicted in order to facilitate a less obstructed view of these various embodiments of the present invention.

### SUMMARY OF THE INVENTION

Generally speaking, pursuant to these various embodiments, a concise display of products from a product source are positioned at points of retail consumer purchasing decisions (and typically within a physical retailing establishment that is not owned and operated by the product source but rather by a third party). A dynamic display is disposed proximal to this product display. The display conveys informational content that comprises product-source-to-consumer relationship-building information for a product source. Such content can include, for example, information regarding product applications, product features, product content, product manufacturing information, product recall information, promotional opportunities, information regarding the product source, and various kinds of consumer entertainment and diversions, to name a few. This content is provided to the display by a processing/presentation unit. The latter couples to a memory interface. In various ways, a representative of the product source can physically visit the display of products and effect via the memory interface provision of updated informational content. In this way, the informational content can be kept relatively fresh to thereby maintain an effective marketing presence.

Pursuant to some embodiments, information provided to the system in this fashion can include an expiration date and/or a start date, such that content can be automatically initiated and/or concluded without requiring a discrete visit from a product source representative corresponding to each such event.

So configured, effective relationship-building content can be both readily utilized and maintained relatively current without requiring any compatible interaction with an existing local area network in the retail venue and at relatively low incremental cost Depending upon the extent and capabilities of the display itself, such an approach can also be used to minimize change-out of physical display materials. This alone has the potential to save a large product source tens of millions of dollars per year. Further, such an approach can be used to not only present at least some categories of existing marketing content but to supplement existing relationship building content with additional relationship building content not presently offered at points of consumer purchasing decision making.

### DETAILED DESCRIPTION

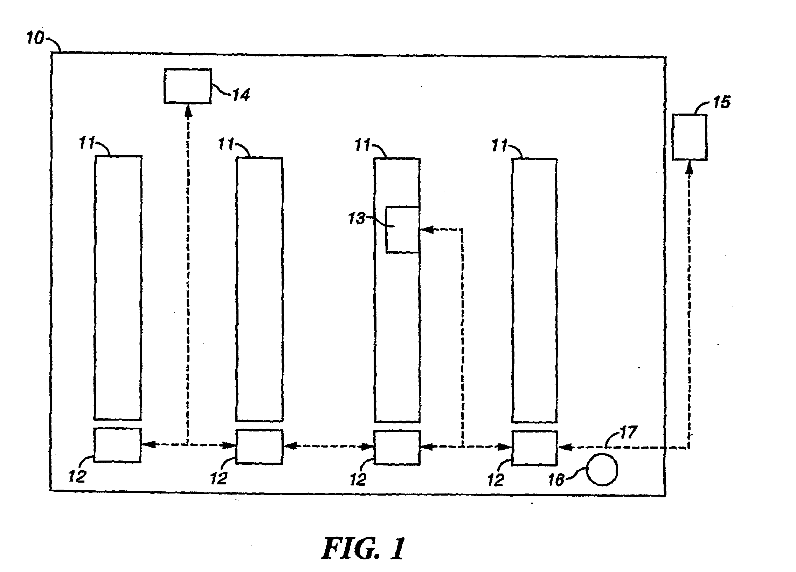

Referring now to FIG. 1, certain aspects of an exemplary grocery store are schematically represented. In this particular example, the store 10, which comprises a retail space not owned by the product source in question and which offers a variety of products including products from the product source, has four main product shelf areas 11 where products can be displayed and offered to consumers who ply the aisles therebetween. In addition, each of these product shelf areas 11, in this example, has an endcap display 12 as well. Such endcap displays are comprised, at least partially, of temporary materials that are usually provided by the product sources themselves and serve to display and offer products belonging to the sponsoring product source (and their marketing partners as may occur from time to time). Such endcaps 12 are well recognized in the art as representing especially prime retail-merchandising space (it is also possible, of course, for such a stand-alone dedicated product display to be located other than at the end of an aisle). It is also possible for a dedicated concise product display 13 (dedicated to a given product source) to be provided within the product shelf areas as well in some cases. In addition, such a store 10 will typically have refrigerated (or frozen) food/drink display areas 14 and may further include vending machines 15 located outside and/or inside the premises. Other product display paradigms are relevant as well. For example, the product display could be arranged on a table or other similar support platform in such a store where consumers eat and/or drink (the products so consumed may be complimentary or as purchased by the consumer).

Pursuant to this embodiment and example, each of these important locations of retail consumer purchasing decision within a single store has been configured to constitute a concise display of product(s) (such as, for example, grocery products such as food and/or beverage products) from a single product source (or if desired, from more than a single product source where, for example, a marketing partnering relationship exists). Such a concise display of products can represent a single product line or can include multiple product lines for a given product source. And, pursuant to this example and embodiment, a dynamic display (as described below in more detail) is also disposed immediately proximal to such displays such that a consumer viewing the display and considering a purchase will view and consider the dynamic display to be a contextual part of the concise product display itself (of course, if desired, not every such concise product display need be equipped with a dynamic display).

A display information processing/presentation unit will utilize product-source-to-consumer relationship-building information as stored in a memory to provide content that is displayed via the dynamic display. In part to ensure fresh content, a representative 16 of the product source (such as a delivery person) can visit the store 10 and physically access a memory interface as corresponds to the above apparatus to thereby download the fresh informational content for immediate and/or subsequent use as described.

In one embodiment, if desired, the various dynamic displays as located at each concise product display 12, 13, 14, and 15 can be coupled to a network 17 (wired and/or wireless as appropriate to the application) such that the informational content can be centrally sourced. While such a configuration offers convenience to the product source representative, in many situations it will not be a likely available option. When such networking is not practical, the representative can proceed as described earlier to physically access each product display and corresponding memory interface.

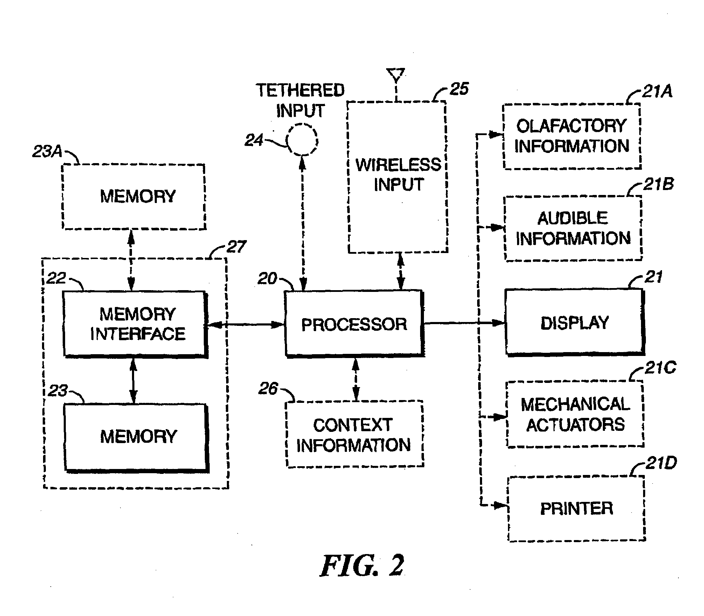

Referring now to FIG. 2, the above generally referred to elements will be described in more detail. A processor 20 couples to and drives a display 21 of choice using informational content obtained from at least one memory 23 through a memory interface 22. Depending upon the particular application, the processor 20 can be a stand-alone device such as a microprocessor or microcontroller or the processor 20 can be realized through use of larger, more complicated and sophisticated processing platforms. For example, where the display mechanism constitutes multiple output peripherals that effect a complicated and fully featured multimedia presentation, a more complex processor 20 will likely be appropriate to ensure satisfactory operation. Conversely, when the display 21 constitutes, for example, a simple scrolling one-line text display, a less featured processor 20 will likely suffice. Similarly, the memory 23 can be provided by anything from a single device with relatively limited size to a multi-device array using one or more storage mediums depending upon the quantity of content that must be stored, the speed with which the content must be accessed, and so forth. In addition, the memory 23 can be realized through electromagnetic media (including floppy disks, Zip disks, hard drives, EPROMs, EEPROMs, compact flash devices, and the like), optical media (including but not limited to CD-R, CD-RW, mini-CD (both read and read/write formats), DVD-R, DVD+RW, DVD-RW, DVD-RAM, mini-DVD, and the like), and such other compatible storage medium as may now or hereafter be available.

Similarly, the display 21 can be realized in a variety of ways as appropriate to the content to be provided, relevant form factor requirements as pertain to the concise product display, and so forth. For example, different kinds of displays are potentially appropriate depending upon whether the informational content comprises a simple light (or series or sequence of lights), static images only (such as text and/or graphic images), animated images (such as animated text and/or graphic images), or a combination of both. The display 21 itself can be either integrated with the processor 20 in a common housing or other support platform or can be separate therefrom. And, of course, the display 21 can be any facilitating technology that is suitable for the intended informational content. For example, the display 21 can be a pixelated display (such as, for example, a cathode ray tube, a projected image display, or a flat panel display such as a light emitting diode array or a liquid crystal display) or a discrete-element display (such as a segmented element display having a plurality of segments that are selectively illuminatable to thereby form composite representations of alphanumeric characters and/or graphic images). Other display mechanisms are compatible here as well, including light emitting diode-based rotary optical illusion displays and light emitting diode-based pendulum optical illusion displays. Such displays are all understood in the art. Therefore, for the sake of brevity and focus, additional information will not be provided here.

Depending again upon the information to be conveyed to the retail consumer, other output peripherals can be used in lieu of or in addition to the visual display 21. For example, olfactory information 21A can be provided through controlled release of previously stored scents, audible information 21B can be conveyed through one of more audio transducers, mechanical actuators 21C can be provided to control a dynamic display that includes moving mechanical elements or to control a valve that, for example, dispenses and/or releases pressurized gas in a balloon-based display or that controls one or more flows of colored fluid (or fluids), and/or one or more printers 21D can be used to provide hardcopy information (including cents-off coupons, recipes, and contest information). All of the above are again well understood information conveyance mechanisms.

Again depending upon the relationship building context desired, it may also be appropriate to include one or more input peripherals. For example, a variety of input peripherals can be coupled to the processor 20 via a tethered input 24. Such a consumer-input interface should, in a preferred embodiment, be disposed proximal to the concise display of products. Such a configuration will typically be supportive of facilitating the desired relationship building activity (for example, by obtaining information from the consumer, either directly in real time from the consumer or indirectly by correlating the consumer to a previously developed data profile, the specific content then delivered to the consumer can be tailored to that consumer in a variety of ways; for example, the informational content can be selected to likely be of specific interest to this particular consumer and/or the informational delivery vehicle can be configured to likely be more effective with this particular consumer). A variety of user input peripherals can be used, including but not limited to a touchscreen display, a cursor movement mechanism (such as a mouse, trackball, or arrow keys), or one or more consumer manipulable keys (up to and including a full alphanumeric keyboard). Other potentially useful user input peripherals include audible signal transducers (up to and including speech recognition platforms), smartcard readers, barcode scanners/readers, and visual image signal transducers (including, for example, projected virtual keyboards such as those developed by Developer VKB Inc.). Such input peripherals can be used alone or in conjunction with other input peripherals to allow a consumer to enter information, request information, and/or to otherwise interact with the overall platform. In addition, if desired, such a tethered input 24 can also be used by the product source representative to effect various activities, maintenance, and control with respect to the overall platform. In addition, or in the alternative, a wireless input 25 can be provided. Such a wireless input 25 could utilize one or more of a wide variety of wireless platforms including but not limited to infrared systems, ultrasonic systems, and radio frequency systems (such as, for example, Bluetooth, so-called 3G cellular telephony, I.E.E.E. wireless network standards 802.11a and 802.11b, and so forth, to name a few). Such a wireless interface could be configured for use as appropriate by the product source representative (to support, for example, downloading of the informational content referred to above), retail store personnel, and/or the consumer themselves.

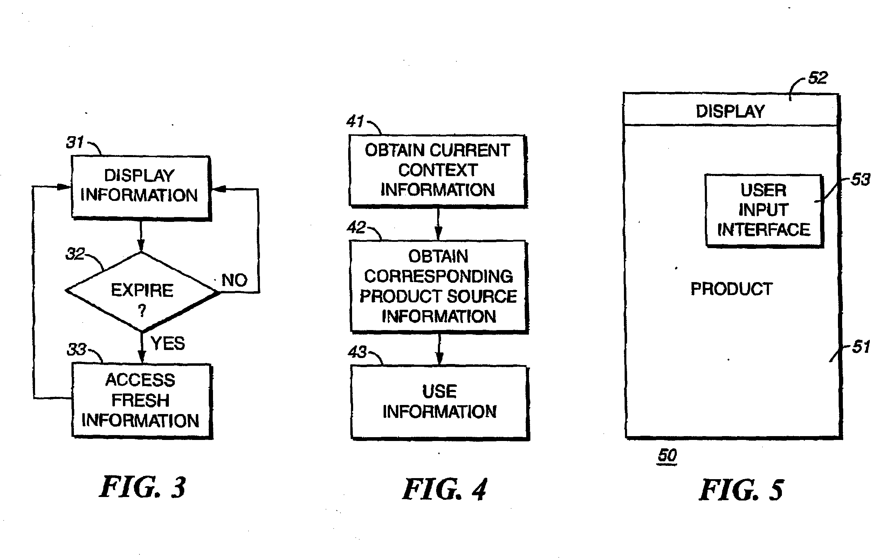

As mentioned earlier, at least one memory 23 and memory interface 22 are provided. In this embodiment, the information to be presented is retained by this memory 23. By one embodiment, the memory 23 contains only fresh product-source-to-consumer relationship-building displayable information suitable for present and current display. In another embodiment, the memory 23 can also include product-source-to-consumer relationship-building displayable information that is suitable for display at a later time. To effect the latter approach, the memory 23 can also store an initiation date by when the latter information is to be displayed. In addition, in these various embodiments, the memory 23 can also store an expiration date by when corresponding information should no longer be displayed. Viewed generally, and with momentary reference to FIG. 3, the processor 20 will display 31 content information as described above. From time to time, the processor 20 will determine 32 whether the content being displayed has expired (by, for example, testing whether a corresponding expiration date has occurred). If the content has not yet expired, the processor 20 continues to use and display the content. Once the expiration has occurred, however, the processor 20 ceases using the expired information and begins using fresh information as also resides in the memory 23.

By storing such information with expiration and/or initiation dates, the product source can ensure that only fresh content is provided to a consumer, even when a product source representative is unable, for whatever reason, to make a timely visit to the platform to ensure such a result. To facilitate this performance, the processor 20 will typically need appropriate contextual information that corresponds to the aforementioned triggers. For example, to effect an appropriate response to an expiration date as described above, the processor 20 must have access to date-related contextual information. Such date information, and any other relevant contextual information, can be intrinsically supplied by the processor 20 itself if so designed, and/or can be provided by some other source. If desired, a specific context information unit 26 can be provided and appropriately coupled to the processor 20. Viewed generally, and referring momentarily to FIG. 4, the processor 20 will obtain 41 current context information as appropriate to the application (including, for example, time of day, date, season, holiday, geographic location, consumer identification, and the like). Using this context information, the processor 20 can then obtain 42 the corresponding product source information from memory 23 and then use 43 that recovered content as described herein.

As described above, the displayable information is stored in a first memory 23. Pursuant to one embodiment, it is this memory 23 that is physically coupled to the memory interface 22 by the product source representative. The product source provides such memories to the field force of representatives along with instructions by when such memories should be installed. The representatives then visit the various field installations of such platforms, remove whatever existing memories might be in place, and couple the new memory 23 to the memory interface to effect the performance described herein. Pursuant to such an approach, the old memory is essentially exchange for a new updated memory. Via another approach, the product source representative can remove the existing memory 23 and place it in another device to thereby download to the existing memory 23 the new informational content (using, for example, a laptop computer, a palmheld computer, a personal digital assistant, or the like). The newly loaded memory 23 would then be replaced to its original position and used accordingly. As one embodiment for achieving this flexibility, the memory interface 22 itself can be comprised as a memory card interface (memory cards (including Smart Media, Memory Sticks, and the like) being relatively robust portable memory devices that can be transported easily, installed with little difficulty, and that tend to retain stored contents with good reliability). As another embodiment for achieving this flexibility, the memory interface 22 can instead comprise a smartcard interface (wherein a smartcard containing the relevant displayable information can be coupled to the interface to effect the data provision contemplated herein).

As another approach, the memory 23 referred to above can remain at least semi-permanently in place. Instead, the product source representative can couple a different memory 23A to the memory interface 22 (which may include, of course, a plurality of memory coupling stations as appropriate to the particular configuration and embodiment). The second memory 23A can have the new displayable information. By coupling the second memory 23A as described, the fresh displayable content contained therein can then be downloaded into the first memory 23 for subsequent use as described. Once the download has been completed, the second memory 23A is then decoupled from the memory interface 22. Pursuant to this approach, the product source would not be required to create and distribute the hundreds of thousands (or possibly millions) of memories that some of the earlier described embodiments might require. Instead, only enough memories need be prepared so as to provide each representative with a memory that could then be used as described to allow downloading to each such station.

The concise product displays are readily accessible by consumers and others by their very nature. It may therefore be appropriate, in some embodiments, to provide some protection and security with respect to the informational content and/or ability to provide informational content. At a minimum, the memory 23, memory interface 22, and possibly other supportive components can be at least partially hidden from view of a consumer who views the concise display of products from an ordinary consumer vantage point. For example, and referring momentarily to FIG. 5, a schematic depiction of the relative contents of a concise product display 50 (such as an endcap) as viewed from the front provides a ready view of product 51, the dynamic display 52, and a user input interface 53 (to the extent that one is provided). Not rcadily viewed from this vantage point, however, are the memory 23, the memory interface 22, the processor, and so forth.

Referring again to FIG. 2, it may also be desirable to place at least some components within a housing 27 such as, for example, the memory 23 and memory interface 22. Further, it may be appropriate to also provide a locking mechanism and corresponding lock to secure the housing and prevent unauthorized access to the interior thereof. These precautions in general would aid in deterring an unauthorized individual from gaining access to the system and removing a memory and/or substituting a memory containing unauthorized displayable content.

It may also be appropriate, in some circumstances, to encrypt the displayable information retained in the memory and/or to provide a corresponding authentication mechanism such that the processor 20 would be able to authenticate that the product-source-to-consumer relationship-building displayable information as contained in the memory is indeed authentic. These actions would further aid in ensuring that inappropriate access would not lead to certain kinds of subsequent unauthorized consequences.

The various embodiments described all serve to greatly facilitate development of a desired relationship between retail consumers and a product source, Appropriate (even significantly customized) information content that serves to facilitate development of such a relationship is presented at significant points of retail consumer decision making notwithstanding the fact that the retail venue in general is neither owned nor controlled by the product source. Such information is provided without need for access to the retail venue's local area network. Further, such content can be kept relatively fresh and current to maximize the relationship-building feature and also to maximize likely recall sales. These embodiments rely upon representatives of the product source, but existing representatives (such as existing delivery personnel or other people who work directly for or otherwise on behalf of the product source (including third party suppliers and temporary services) can readily serve in this role as the process requires little or no special training to achieve the desired benefits. Also, dynamic displays such as those described may reduce or obviate a need to endlessly create and replace physical point-of-decision displays to maintain fresh, effective marketing mechanisms. In addition, the benefits of these embodiments are readily scalable, with significant benefits being achievable with both relatively inexpensive modest displays and relatively costly and complicated displays.

Those skilled in the art will recognize that a wide variety of modifications, alterations, and combinations can be made with respect to the above described embodiments without departing from the spirit and scope of the invention, and that such modifications, alterations, and combinations are to be viewed as being within the ambit of the inventive concept. For example, relationship-building content can be varied geographically to better address local needs, tie-ins, promotions, language and idioms, seasons, and so forth. The content as installed by the product source representative can include all potential content for a wide geographic territory (such as, for example, a continent) and the processor 20 can then select and utilize only that content that is appropriate to the particular geographic location where the processor 20 is located. Such location information can be ascertained automatically (through use of, for example, the global positioning system) and/or can be determined through initial calibration settings for the processor 20 or by subsequent instructions (as input, for example, by the product source representative). As another example, a wireless mechanism (such as cellular telephony )could be used to allow this mechanism to transmit information (as obtained, perhaps, from a given consumer) to another point, such as a central data collection center for the retailer. As yet another example, available informational content can also be freshened by having all content for some extended period of time (up to and including all multimedia content) pre-loaded in the memory 23 and then beaming a text-based schedule into an open part of the memory 23 using a wireless or tethered link from a remote device (such as a cellphone or other two-way voice/messaging personal communications device, a personal digital assistant, a laptop computer, a two-way pager, and so forth) to organize and cause present use of portions of the total stored content. As yet still another embodiment, some of the displayed information and/or supplemental information could be transmitted wirelessly (preferably over a very short range) to a consumer wireless device such as a cellular telephone or personal digital assistant (information such as recipes, nutritional content, special offers, contest information, and so forth could readily be accommodated in this fashion. Such transmissions could be based upon one or more universal channels or could otherwise utilize recently entered or previously stored (as in a profile) communication information (such as telephone numbers, wireless LAN addresses, and so forth).

## Claims

1. A method of providing fresh product-source-to-consumer relationship-building information for a product source at a plurality ofpoint-of-consumer-purchasing-decision locations (12, 13, 14, 15), which locations (12, 13, 14, 15) are owned and operated by a plurality of third parties other than the product source, comprising:
- providing at points of retail consumer purchasing decisions (12, 13, 14, 15):
- a concise display of products (12, 13, 14, 15) from the product source, which products are available for selection by retail consumers;
- a dynamic display (21; 52) disposed immediately proximal to the concise display of products (12, 13, 14, 15);
- at least one memory interface (22) disposed immediately proximal to the concise display of products (12, 13, 14, 15);
- a display information processing/presentation unit (20) disposed immediately proximal to the concise display of products (12, 13, 14, 15) and being operably coupled to the dynamic display (21; 52) and having an input coupled to at least one memory interface (22) and a product-source-to-consumer relationship-building displayable information output operably coupled to the dynamic display (21; 52); via a representative (16) of the product source:
- physically accessing the at least one memory interface (22) to couple at least one physical memory (23, 23A) to the at least one memory interface (22), which at least one physical memory (23, 23A) contains fresh product-source-to-consumer relationship-building displayable information suitable to display on the dynamic display (21; 52).

2. A method according to claim 1, wherein the concise display of products comprises an end-cap display of products (12).

3. A method according to claim 1 or claim 2, wherein at least one of the points of retail consumer purchasing decision comprises a vending machine (15).

4. A method according to any claims 1 to 3, wherein the dynamic display (21: 52) comprises a display of at least one of dynamic changeable static images and a display of animated images.

5. A method according to any one of claims 1 to 4, wherein the at least one physical memory (23, 23A) contains fresh product-source-to-consumer relationship-building displayable information suitable to immediately display on the dynamic display (21; 52).

6. A method according to any one of claims 1 to 5, wherein the at least one physical memory (23, 23A) contains an expiration date by when the fresh product-source-to-consumer relationship-building displayable information should no longer be displayed on the dynamic display (21; 52).

7. A method according to any one of claims 1 to 6, wherein the at least one physical memory (23, 23A) contains fresh product-source-to-consumer relationship-building displayable information suitable to display on the dynamic display (21; 52) at a later time.

8. A method according to claim 7, wherein the at least one physical memory (23, 23A) contains fresh product-source-to-consumer relationship-building displayable information suitable to display on the dynamic display (21; 52) at a later specified time.

9. A method according to any one of claims 1 to 8, wherein physically accessing the at least one memory interface (22) to couple at least one physical memory (23, 23A) to the at least one memory interface (22) includes leaving the at least one physical memory (23) physically coupled to the at least one memory interface (22) to facilitate provision of the product-source-to-consumer relationship-building displayable information.

10. A method according to any one of claims 1 to 8, wherein physically accessing the at least one memory interface (22) to couple at least one physical memory (22; 23A) to the at least one memory interface (22) includes downloading the product-source-to-consumer relationship-building displayable information to the display information processing unit (20) and then decoupling the at least one physical memory (23, 23A) from the at least one memory interface (22).

11. A method according to claim 10, wherein downloading the product-source-to-consumer relationship-building displayable information to the display information processing unit (20) includes storing the product-source-to-consumer relationship-building displayable information in another memory (23A) that is accessible to the display information processing unit (20).

12. A method according to any one of claims 1 to 11, wherein the at least one physical memory (23, 23A) contains:
- at least some fresh product-source-to-consumer relationship-building displayable information suitable to immediately display on the dynamic display (21; 52) and
- at least some fresh product-source-to-consumer relationship-building displayable information suitable to immediately display on the dynamic display (21; 52) at a later time.

13. A method according to any one of claims 1 to 12, further comprising providing a consumer input interface (24, 25; 53) disposed proximal to the concise display of products (12, 13, 14, 15) and being operably coupled to the display information processing unit (21).

14. A method according to any one of claims 1 to 13, wherein the physical memory (23, 23A) further includes self-authenticating information such that the display information processing unit (20) can authenticate that the product-source-to-consumer relationship-building displayable information as contained in the physical memory (23, 23A) is authentic.

15. A method according to any one of claims 1 to 14, wherein at least some of the product-source-to-consumer relationship∼building displayable information as contained in the physical memory (23, 23A) is encrypted.

16. A method according to any one of claims 1 to 15, wherein the dynamic display (21: 52) comprises a display of dynamic changeable static images.

17. A method according to claim 16, wherein at least some of the dynamic changeable static images comprise text.

18. A method according to claim 16 or claim 17, wherein at least some of the dynamic changeable static images comprise graphic images.

19. A method according to any one of claims 1 to 15, wherein the dynamic display (21; 52) comprises a display of animated images.

20. A method according to any one of claims 1 to 19, wherein the at least one physical memory (23, 23A) contains an expiration date by when the fresh product-source-to-consumer relationship-building displayable information should no longer be displayed on the dynamic display (21; 52).

21. A method according to any one of claims 1 to 20, wherein the at least one physical memory (23, 23A) contains:
- at least some fresh product-source-to-consumer relationship-building displayable information suitable to immediately display on the dynamic display (21; 52); and
- at least some fresh product-source-to-consumer relationship-building displayable information suitable to display on the dynamic display (21; 52) at a later time.
